# EUROPÄISCHE PATENTSCHRIFT

(11) **EP 0 204 073 B1**
(45) Veröffentlichungstag und Bekanntmachung des Hinweises auf die Patenterteilung: **17.03.1993**
(21) Anmeldenummer: 86102759.7
(22) Anmeldetag: 03.03.1986
(51) Int. Cl.: B25B 5/14

(54) **Eine Schraube aufnehmender Halter mit Vorrichtung zum Bestimmen (Messen, Prüfen, Bearbeiten) der Koaxialität von Gewinde und Schaft der Schraube**
Screw-retaining device provided with a means for determining (measuring, testing, working) the concentricity of the screw's thread and shank
Griffe maintenant une vis avec dispositif pour déterminer (mesurer, vérifier, travailler) la concentricité du filet et de la tige de la vis

(30) Priorität: 27.03.1985 DE 3511040
(43) Veröffentlichungstag der Anmeldung: 10.12.1986
(73) Patentinhaber: Kamax-Werke Rudolf Kellermann GmbH & Co. KG, D-37520 Osterode (DE)
(72) Erfinder: Turlach, Gerhard, Dipl.-Ing., D-3360 Osterode am Harz (DE); Mages, Walter, Dr.-Ing., D-6320 Alsfeld (DE)
(74) Vertreter: Beyer, Rudi

(56) Entgegenhaltungen:
- DE-A- 1 627 241
- DE-A- 1 907 956
- DE-A- 1 914 104
- DE-A- 2 517 997
- DE-B- 1 171 837
- DE-C- 921 361
- FR-A- 2 075 482
- FR-A- 2 519 276
- US-A- 2 720 735
- US-A- 2 829 442
- US-A- 3 727 904

## Beschreibung

Die Erfindung betrifft eine Haltevorrichtung zum Messen und Prüfen der Koaxialität von Gewinde und Schaft an Schrauben, wobei der Halter ein über eine beliebige axiale Gewindelänge angeordnetes Kupplungsteil aufweist, das beim Eingreifen in das Gewinde in eine starre, unveränderliche Form bringbar und auch wieder zurückstellbar ist und sich gegen ein Widerlager abstützt.

Die Koaxialität fällt unter den Begriff der Lagetoleranzen die grundlegend in DIN 7184 beschrieben werden. In DIN 7184, Bl. 1, S. 16 heißt es: "Koaxialitätstoleranz einer Achse zu einer Bezugsachse ist der Durchmesser t eines zur Bezugslinie koaxialen Zylinders, in dem alle Punkte der tolerierten Achse liegen müssen, wenn dem Toleranzwert das Zeichen "φ" vorangestellt ist."

Die Koaxialitätstoleranz oder Konzentrizität ersetzt hierin den Begriff der Mittigkeitsabweichung und hat den doppelten Zahlenwert derselben. Weiterhin heißt es dort in einer Fußnote: "Bei Angabe von Koaxialitätstoleranzen ist zu berücksichtigen, daß diese Toleranzen für Achsen gelten, die meßtechnisch schwer erfaßbar sind. Daher wird bei kreisförmigen Mantelflächen die Angabe von Lauftoleranzen empfohlen, wobei jedoch zu beachten ist, daß damit auch die Rundheitsabweichungen zusätzlich eingegrenzt sind."

Diese Fußnote deutet auf die Schwierigkeiten hin, die bei der Messung der Koaxialität auftreten können. Die Bezugsachse wird angenähert häufig aus der Verbindung der Mittelpunkte äquidistanter Zylinderquerschnitte nach dem Prinzip der "Kleinsten Fehlerquadrate" bestimmt.

Das Bezugselement wird nach DIN 7184, Bl. 1, S. 2 folgendermaßen definiert:
"Bezugselement ist dasjenige geometrische Element, das bei Anwendung einer Lagetoleranz als Ausgangsbasis dient. Als Bezugselement sollte möglichst das Element gewählt werden, das auch bei der Funktion des Werkstückes als Ausgangsbasis dient. Das Bezugselement muß genügend formgenau sein. Nötigenfalls müssen Formtoleranzen vorgeschrieben werden."

Entsprechend der Funktion der Schraube wäre demnach die Gewindeachse als Bezugsachse zu wählen; demgegenüber steht aber die Tatsache, daß das Formelement Gewindeachse häufig größere Formabweichungen als die Schaftachse aufweist.

Nach DIN 267, Bl. 2, S. 7 wird die Gewindeachse als Bezugsachse durch den Schraubenzylinder am Flankendurchmesser bestimmt. Allerdings wird in DIN 267 die Koaxialität vereinfachend als Mittigkeitsabweichung beschrieben (DIN 267, Bl. 2 + Bild 15, S. 7):
Bei der Verwendung von Maschinenelementen mit Gewinden werden vielfach hohe Anforderungen an die Genauigkeit und die Toleranzen der Abmessungen gestellt. Dies drückt sich insbesondere dadurch aus, daß verschiedene Lage- und Formtoleranzen auf das Gewinde als Basis bezogen sind. So werden oft in Zeichnungen und technischen Spezifikationen Koaxialitäts-, Rundlauf-, Planlauf- und anderer Abweichungen zur Aufnahme im Gewinde definiert.

So einfach diese Forderung hinsichtlich ihrer Definition und ihrer Auswirkung zu verstehen ist, so schwierig gestaltet sich die technische Realisierung und der technische Nachweis. Das Bezugsmaß, auf dem sich das Gewindeprofil aufbaut, ist der Flankendurchmesser. An einem derartigen Gewinde ist dieser Durchmesser jedoch eine reine Rechengröße, die mit einfachen Mitteln nicht ohne weiteres meßbar ist. Das Gewinde als Basis oder Referenzgröße kann somit nicht explizit, sondern nur indirekt bestimmt werden, womit erhebliche Probleme und Ungenauigkeiten verbunden sind.

Bei der Herstellung und bei der Kontrolle von Funktionsflächen, die zu anderen Funktionsflächen (im o. g. Fall dem Gewinde) in engen Toleranzen liegen müssen, wird üblicherweise die Referenzfunktionsfläche als Einspannung benutzt. Bei Gewinden als Funktionsfläche, insbesondere bei spanlos hergestellten, stößt man hier auf Schwierigkeiten, da der Flankendurchmesser, der als Mittellinie durch das Gewindeprofil verstanden werden kann, als Spannfläche nicht zur Verfügung steht. Im Laufe der Zeit sind daher eine Reihe von Spannverfahren und -vorrichtungen entwickelt worden, die jedoch alle den Nachteil haben, daß bereits beim Einspannen mehr oder weniger große Fehler entstehen und darüber hinaus das Einspannergebnis nicht reproduzierbar ist.

Es sind verschiedene Prüfgeräte zur Messung der Koaxialität aus der industriellen Praxis bekannt, die alle die Schraube am Gewindeende aufnehmen und am Schaft messen. Ein grundsätzliches Unterscheidungsmerkmal der Geräte liegt in der Gewindeaufnahme am Außendurchmesser oder in den Gewindeflanken durch unterschiedliche Gegengewinde. Je nach Form und Aufnahme ergeben sich verschiedene Vor- und Nachteile beim Messen mit den einzelnen Prüfgeräten.

### a) Gewindeaufnahme mittels eines Gewindelehrringes (Normalgewinde)

Bei diesem Meßgerät wird eine Schraube in einen Gewindelehrring eingeschraubt. Die Spitzen des Gewindes im Lehrring sind verkürzt um die Schrauben im Flankendurchmesser aufzunehmen. Der Lehrring sitzt in einer zentrischen Passung eines drehbar gelagerten Zylinders und wird in dieser durch einen Befestigungsring in eine ringförmige Planfläche gepreßt. Die Schraube kann über die volle Gewindelänge in den Lehrring eingeschraubt werden.

### Vorteile dieses Meßgeräts

Durch die drehbare Gewindeaufnahme ist ein Berühren der Schraube und damit eine eventuelle Verfälschung der Meßergebnisse während der Messung nicht möglich. Die Meßebene am Schaft bleibt bei der Drehung erhalten.

### Nachteile des Meßgeräts

Die Schrauben werden nicht spielfrei und nicht definiert im Bereich des Flankendurchmessers in dem Lehrring aufgenommen, was dazu führen kann, daß sie während der Drehung, durch die Tastkraft der Meßuhr oder durch die Schwerkraft im Lehrring ihre Lage verändern. Bei Schrauben mit Gewindebeschädigungen ist das Einschrauben in den Lehrring mit Schwierigkeiten verbunden. Durch die nicht spielfreie Aufnahme erhält man bei Wiederholmessungen stark streuende Werte.

### b) Gewindeaufnahme mittels einer dreigeteilten Spannzange

Bei diesem Gerät wird die Schraube auf dem Gewindeaußendurchmesser in einer dreigeteilten Spannzange aufgenommen.

Für unterschiedliche Gewindedurchmesser können verschiedene Spannzangen verwendet werden.

### Vorteile des Meßgeräts

Durch die Aufnahme am Gewindeaußendurchmesser stören Beschädigungen des Gewindes nicht bei der Messung. Durch die drehbare Lagerung wird die Schraube bei der Messung nicht berührt. Das einfache Einspannen der Schrauben ermöglicht schnelle Meßfolgen. Die Meßebene am Schaft bleibt konstant.

### Nachteile dieses Meßgeräts

Es ist keine normgerechte (DIN-gerechte) Aufnahme am Flankendurchmesser gegeben. Ein leichtes Verkanten der Schrauben beim Spannen ist möglich, wodurch sich falsche Meßwerte für die Mittigkeitsabweichung ergeben.

### c) Dreirollenmeßgerät (kleine Rollen)

Bei diesem Meßgerät liegt die Schraube zwischen drei gelagerten Rollen und wird von einer Feder über die obere Rolle gegen die beiden unteren gedrückt. Die Rollen sind zylindrisch und glatt. Die unteren beiden Rollen sind länger als das hier zu prüfende Gewinde. Sie sind drehbar, jedoch fest positioniert. Die obere drehbare Rolle ist wesentlich schmaler als die beiden anderen und kann zwecks Einstellung ihres Auflagepunktes parallel zu ihrer Achse verschoben werden. Zur Messung muß an einer der drei Rollen gedreht werden, wobei sich die Schraube mitdreht.

### Vorteile dieses Meßgeräts

Schrauben mit verschiedenen Gewindedurchmessern können problemlos wechselnd gemessen werden. Das Einlegen der Schrauben ist von allen Geräten am einfachsten. Beschädigungen im Gewinde spielen praktisch keine Rolle, da integrierend gemessen wird.

### Nachteile dieses Meßgeräts

Die Aufnahme ist nicht normgerecht (DIN-gerecht). Die Schraube wandert beim Drehen in Achsrichtung, wodurch sich der Meßort verändert. Gebogene Schrauben haben keine definierte Auflage auf den langen Rollen.

### d) Aufnahme im geteilten Gewinde

Bei diesem Gerät wird die Schraube zwischen zwei gleichen Gewindeteilen eingespannt. Der obere Gewindeteil wird durch eine Feder vorgespannt, die Kraft ist einstellbar, allerdings nur nach dem Gefühl des Prüfenden. Ein Anzeigegerät ist nicht vorgesehen. Die beiden Gewindehälften sind drehbar, rasten zur Messung jedoch ein. Sie werden zum Einlegen der Schraube nach vorn gedreht. Ein Gewindeteil kann sich im geringen Maß in Schraubenachsrichtung verschieben, um ein genaues Eingreifen in das Gewinde zu ermöglichen.

### Vorteile dieses Meßgeräts

Normgerechte Aufnahme der Schraube am Flankendurchmesser. Das Einspannen der Schraube geht schneller als bei den ersten beiden Geräten.

### Nachteile dieses Geräts

Dieses Gerät erfordert von dem Prüfer ein hohes Maß an Einfühlungsvermögen, da die Schraube während der Messung an ihrem Schaft angefaßt und gedreht werden muß. Dabei geschieht es sehr leicht, daß auf die Schraube eine zusätzliche Kraft ausgeübt wird, die zu großen Meßfehlern führt. Weiterhin muß der Prüfer die Federvorspannung sehr präzise einstellen, da bei zu großer Vorspannung die Schraube klemmt, bei zu geringer Spannung ist die Schraube nicht spielfrei aufgenommen. Zusätzlich besteht beim Einlegen der Schraube Verletzungsgefahr beim Prüfer. Die Güte der Messung ist somit stark vom Prüfer abhängig. Der Einspannort und der Meßort verändern sich während der Messung. Gewindebeschädigungen wirken sich direkt bei der Messung aus, die Schraube läßt sich nur gewaltsam drehen, woraus falsche Meßwerte folgen.

### e) Aufnahme im konischen Gewinde

Zur Messung wird die Schraube in ein konisches Gewinde eingeschraubt. Dieses Gewinde befindet sich an einem Einsatz, der ebenfalls konisch in einem Zylinder aufgenommen und zentriert wird. Der Zylinder ist drehbar gelagert. Das konische Gewinde kann für verschiedene Gewindedurchmesser ausgewechselt werden. Die Aufnahme der Schrauben erfolgt in den ersten Gewindegängen.

### Vorteile dieses Meßgeräts

Leichte Messung durch drehbare Lagerung.

### Nachteile dieses Meßgeräts

Starke Einflüsse der ersten Gewindegänge auf die Messung, bei Beschädigung dieser Gänge läßt sich die Schraube nur sehr schwer exakt eindrehen. Durch die konische Aufnahme kann die Schraube exzentrisch ausweichen, was zu größeren Mittigkeitsabweichungen führt.

### f) Dreirollengerät (große Rollen)

Bei diesem Gerät gilt sinngemäß das gleiche wie unter c) ausgeführt.

Aus der DE-PS 921 361 ist ein Meßgerät für das Messen eines Prüfstücks mit einem Meßrahmen mit zwei zusammenwirkenden, vom Meßrahmen getragenen Prüfelementen zur Halterung und zum Messen des Prüfstücks in Meßstellung vorbekannt, wobei wenigstens eines der Prüfelemente eine drehbare Prüfrolle aufweist. Das Meßgerät ist ferner mit einer die Bewegung der Prüfelemente ermöglichenden Vorrichtung zum Einfügen des Prüfstücks in die Prüfelemente und zum Messen des Prüfstücks und mit einer Meßuhr versehen, die, an dem Meßrahmen angebracht, mit den Prüfelementen verbunden ist und die eine Meßbewegung ausführt, um die Stellung des Prüfelementes anzuzeigen. Durch die Drehbarkeit einer Prüfrolle ist das Prüfstück in Meßstellung drehbar. Mindestens eines der Prüfelemente ist zur Bewegung auf einem auf dem Meßrahmen angeordneten beweglichen Rahmen gelagert. Dadurch soll der Bereich der Prüfstücke, deren Messung mit diesem Gerät möglich ist, wesentlich vergrößerbar sein. Die oben beschriebenen Nachteile des Standes der Technik zum Bestimmen der Koaxialität von Gewinde und Schaft an Schrauben lassen sich mit einer Vorrichtung nicht vermeiden.

In diesem Zusammenhang wird verwiesen auf das DE-GM 17 79 193, das ein Meßgerät zur Ermittlung der Außermittigkeit zwischen der Achse eines zu prüfenden Schraubenbolzens und der Achse seines Gewindes betrifft, wobei eine zum konzentrischen Einspannen des Bolzens dienende Vorrichtung vorgesehen ist, die aus mindestens drei um den gleichen Winkel gegeneinander versetzte, vorzugsweise auswechselbare Spannrollen besteht, die das gleiche Gewindeprofil wie der zu prüfende Schraubenbolzen aufweisen, so daß bei dessen Einspannen die Flanken dieser beiden Gewinde jeweils zu einer linienförmigen Berührung kommen. Bei Verwendung von Dreispannrollen ist lediglich eine radial verschiebbar angeordnet. Die Spannrollen sind in den einen Enden untereinander gleicher Bügel befestigt, deren andere Enden auf einem derart konzentrisch zur Achse der Spannvorrichtung verlaufenden Kreis an dieser drehbar angeordnet sind, daß durch Verdrehen eines gleichfalls konzentrisch angeordneten Außenringes, der auf seinem Innenumfang unter gleichem Winkel gegeneinander versetzte, von der Zahl der Spannrollen sowie unter sich gleiche Vorsprünge aufweist, sich die Spannrollen gleichzeitig und gleichmäßig der Achse der Spannvorrichtung nähern oder sich von ihr entfernen. Die Spannvorrichtung ist als Ganzes um ihre Achse drehbar.

Aus der DE-A-1 627 241 ist eine Vorrichtung zur Aufnahme von zu bearbeitenden dünnwandigen hohlzylindrischen Werkstücken, insbesondere von Zylinderlaufbüchsen, vorbekannt, wobei in einem Ringhohlraum zwischen dem Werkstück und einer zu diesem konzentrischen mechanisch starren Halterung ein aufweitbarer Druckbalg vorgesehen ist. Der Druckbalg kann aus einem schraubenförmig gewundenen elastisch aufweitbaren Schlauch bestehen. Der ohne Gewebeeinlage ausgeführte Schlauch ist in radialer Richtung aufweitbar. Eine derartige Vorrichtung soll insbesondere zur Aufnahme von Werkstücken mit großen Durchmessern dienen, wobei die Windungen des Schlauches in eine in der Wand der Halterung vorgesehene schraubenlinienförmig verlaufende Ausnehmung eingelegt sind, deren Ränder den Schlauch teilweise umgreifen. Bei Werkstücken kleinen Durchmessers sollen die Windungen des Schlauches dicht aneinanderliegen. In die zwischen den Schlauchwindungen bestehende Schraubenrille soll werkstückseitig eine Schraubenfeder eingelegt sein, die bei nicht aufgeweitetem Schlauch über die Schlauchwindungen hervorragt. Die mechanisch starre Halterung ist kardanisch aufgehängt und umfaßt das Werkstück. Dieser Druckschrift liegt die Aufgabe zugrunde, der beim Spannen von dünnwandigen hohlzylindrischen Werkstücken zu stellenden Forderung nach Formhaltigkeit des Werkstückes zu genügen. Dadurch, daß die Schraubenfeder über den nicht aufgeweiteten Schlauch durch die Schlauchwindungen hervorragt, wird erreicht, daß das Werkstück beim Einschieben in die Halterung und beim Herausziehen aus derselben auf der Schraubenfeder und nicht auf dem weniger verschleißfesten Schlauch gleitet. Erst wenn der Schlauch unter Druck gesetzt wird, kommt er mit dem Werkstück in Berührung und legt sich an diesen an. Eine solche Vorrichtung wird insbesondere zum Bearbeiten von Zylinderlaufbüchsen von Brennkraftmaschinen verwendet, welche die in bezug auf thermische Belastung an sie gestellten Forderungen um so besser erfüllen, je dünner ihre Wand ist.

Aus der US-A-3 727 904 ist eine Halte- und Befestigungsvorrichtung für eine Welle oder für einen Bolzen vorbekannt, wobei die Welle oder der Bolzen in ein innenseitig mit scharfkantigen Gewindegängen versehenes Greiffutter koaxial eingebracht wird. Die Welle oder der Bolzen ist endseitig geschlitzt ausgebildet, so daß stirnseitig in die Welle oder in den Bolzen ein konischer Spannkörper eingetrieben werden kann, wodurch die Welle oder der Bolzen nach außen aufgeweitet wird. In die Gewindegänge des Spannfutters wird ein Draht mit kreisförmigem Querschnitt eingelegt, der sich beim Verspannen gegen die Oberfläche des zu ergreifenden Wellen- oder Bolzenendes anlegt. Dadurch soll einerseits ein genaues Greifen des Wellen- oder Bolzenendes erzielt, andererseits eine Beschädigung oder Verformung des an dem Spannfutter vorgesehenen Gewindes ausgeschlossen werden.

Die DE-A-1 914 104 betrifft eine Halterung für ein Werkstück. Diese Halterung weist eine langgestreckte, rohrförmige Muffe mit einer Innen- und einer Außenfläche auf, mit einer ringförmigen, elastischen Hülse, die an der Innenfläche der Muffe anliegt. Außerdem ist eine ringförmige Klemmhülse vorgesehen, die an der Innenfläche der Muffe befestigt ist und an der Innenfläche der elastischen Hülse anliegt. Es ist außerdem eine Einrichtung für die Zufuhr eines fließfähigen Druckmittels in die Muffe vorgesehen, wodurch die elastische Hülse nach innen gegen die Außenfläche der Klemmhülse gedrückt werden kann, um diese gegen ein Werkstück zu drücken und dieses zu erfassen. Hierzu ist die Muffe mit einer ringförmigen Aussparung an ihrer Innenfläche versehen, die durch eine obere und eine untere Schulter begrenzt ist, wobei die Muffe ferner durch eine durch ihre Wand verlaufende Bohrung für die Zufuhr eines fließfähigen Druckmittels in die Kammer aufweist, die durch die Außenfläche der elastischen Hülse und die Aussparung der Innenfläche der Muffe gebildet ist. Die Halterung ist mit einem Auswerfer zum Auswerfen des Werkstückes vorgesehen. Außerdem weist die Klemmhülse an ihrem oberen Ende eine Vielzahl von Aussparungen auf, von denen jeweils ein Schlitz ausgeht, der sich im wesentlichen über die Länge der Klemmhülse erstreckt, wobei die Klemmhülse an ihrem unteren Ende eine Vielzahl von Aussparungen aufweist, von denen je ein Schlitz ausgeht, der sich im wesentlichen über die Länge der Klemmhülse erstreckt. Die Schlitze verlaufen parallel zueinander und bilden eine Anzahl von Platten, die durch ausgebuchtete Teile miteinander verbunden sind, um einen zusammenhängenden kreisförmigen Teil zu bilden.

Die FR-A-2 075 482 weist eine Haltevorrichtung auf, wobei die Spannung über konzentrisch angeordnete, steigungslose Ringe aufgebracht wird, die von außen eine Druckmittelbeaufschlagung erhalten.

Vorbekannt ist auch das sogenannte "Spieth"-System für Spannhülsen, Spanndorne, Spannmuttern oder dergleichen. Das Wirkungsprinzip arbeitet mit einem labyrinthartig geformten Körper (Wellenrohr). Wesentlich ist hierbei, daß durch eine axiale Verformung eine radiale Deformation des Bauteils erzwungen wird. Dieses System ist zum Spannen geeignet, für eine Einspannung im Sinne der Zentrierung für einen anschließenden Meßvorgang jedoch ungeeignet (Firmendruckschrift "Stellmutter Baureihe MSR" der Spieth-Maschinenelemente GmbH & Co. KG, Esslingen-Zell, 1983).

Soweit vorveröffentlichte Druckschriften Haltevorrichtungen für Gewindestücke betreffen, bestehen ihre Kupplungsteile aus festem Material (Metall), die zum Eingreifen in das Gewinde verschoben werden (vgl. Druckschriften wie folgt:
Richter-von Voss "Bauelemente der Feinmechanik" 1952 S. 322, Bild 1210; Typenblätter I/21 und I/22 "Spannfutter-System SP" der Firma Emuge-Werk R. Glimpel, 8560 Lauf; Typenblätter I/6, I/7 und I/8 "Spitzenspanndorn-System SP" der Firma Emuge-Werk; Firmendruckschrift S04 "Anwendungsbeispiel Gewindespannung" mit Schreiben vom 3. November 1986, beides von der Firma Emuge-Werk; Informationsblatt O/20 "Problemlösungen Bohren" der Firma Emuge-Werk; Berechnungsblätter A3, A4, A4a, b "Gewindezentrierung" nach Prof. Kübler; Firmendruckschrift EXT/976/1177 der Firma Johnson Gage Comp. USA; Firmendruckschrift "Cordax Schraubenschlag-Meßgerät" der Firma Kordt & Co., Eschweiler; Firmendruckschrift "Cord Mutter-Stirnschlag-Meßgerät 5023" der Firma Kordt & Co., Eschweiler; Merkblatt "Der Aufbau des Heli-Coil-Gewindeeinsatzes"; Firmendruckschrift "Stellmutter Baureihe MSR" der Spieth-Maschinenelemente GmbH & Co. KG, Esslingen-Zell, 1983; Kübler-Mages "Handbuch der hochfesten Schrauben" Verlag W. Girardet, Essen, S. 20 bis 25).

Der Erfindung liegt die Aufgabe zugrunde, eine Vorrichtung gemäß der im Patentanspruch 1 vorausgesetzten Gattung so auszugestalten, daß sich mit der erfindungsgemäß angestrebten Vorrichtung - unabhängig von der Sorgfalt der Bedienungsperson - ein schnelles und problemloses Bestimmen der Koaxialität von Gewinde und Schaft über einen beliebig langen Gewindeabschnitt erzielen läßt.

Die Aufgabe wird durch die in **Patentanspruch 1** wiedergegebenen Merkmale gelöst.

Bei der erfindungsgemäßen Vorrichtung werden die bekannten Nachteile vermieden, in dem die Vorrichtung zunächst während des Einbringens des Prüflings formveränderlich ist, und sich somit die den Gewindeabweichungen, örtlichen Beschädigungen oder Durchbiegung im Gewindebereich voll anpassen kann. Anschließend wird das Kupplungsteil in einen starren Zustand überführt in der Form, daß sich das Gewinde in der Vorrichtung selbst zentriert, d. h. das räumliche Abstandsquadrat aller Abweichungen von der idealen Gewindeform wird Null.

Eine erfindungsgemäße Vorrichtung ist in ihrer Benutzung auch unabhängig von Sorgfalt des damit arbeitenden Personals. Auch lassen sich beliebig lange Gewindebereiche erfassen.

In **Patentanspruch 2** ist eine vorteilhafte Ausführungsform beschrieben. Bei dieser wird als Kupplungsteil ein Schlauch vorgesehen, der während des Einbringens des Prüflings zunächst elastisch verformbar ist und anschließend durch Druckmittelbeaufschlagung, z. B. durch Beaufschlagung mittels hydraulischen Druck, praktisch starr wird.

Bei der Ausführungsform gemäß **Patentanspruch 3** stützt sich der Schlauch gegen ein starres Rohr ab, das an seiner vom Schlauch berührten Mantelfläche hochwertig bearbeitet ist, z. B. geschliffen sein kann.

**Patentanspruch 4** beschreibt eine weitere Ausführungsform der Erfindung. Bei dieser wird das Kupplungsteil durch eine durch Druckmitteldruck beaufschlagbare Membran gebildet, die sich in die Schraubenlänge hineinverformt und bei der Druckmittelbeaufschlagung eine starre Kupplung darstellt.

In den **Patentansprüchen 5** bis **7** sind weitere vorteilhafte Ausführungsformen der Erfindung beschrieben.

In der Zeichnung ist die Erfindung - teils schematisch - an mehreren Ausführungsbeispielen veranschaulicht. Es zeigen:
- Fig. 1: eine Vorrichtung gemäß der Erfindung, teils in der Seitenansicht, teils im Schnitt;
- Fig. 2: eine weitere Ausführungsform der Erfindung;
- Fig. 3: eine weitere Ausführungsform der Erfindung in ausschnittsweiser Darstellung und
- Fig. 4: abermals eine weitere Ausführungsform der Erfindung, gleichfalls in ausschnittsweiser Darstellung.

In der Zeichnung ist mit dem Bezugszeichen 1 eine Schraube bezeichnet, die mit Gewinde 2 an sich beliebiger Ausgestaltung versehen ist. Auch ist die Gangzahl - die Anzahl der Gewindegänge - und ihr Drehsinn an sich beliebig für die Verwirklichung des Erfindungsgedankens (Aufgabe und Lösung).

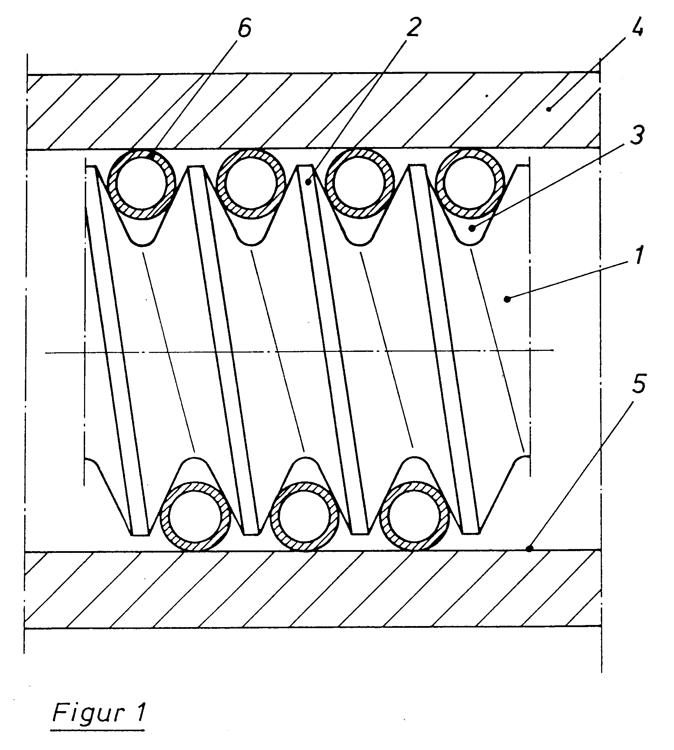

Bei der Ausführungsform nach Fig. 1 wird die Schraube 1 von einem Widerlager in Form eines Rohres 4 umgriffen, das an seiner Innenwandung 5 z. B. geschliffen ist.

Mit dem Bezugszeichen 6 ist ein Kupplungsteil in Form eines flexiblen Schlauches bezeichnet, das in den Gewinderillen 3 angeordnet ist. Durch Beaufschlagung mit hydraulischem Druck wird das Kupplungsteil 6 quasi starr, so daß sich das Gewinde 2 in dem Widerlager 4 selbst zentriert.

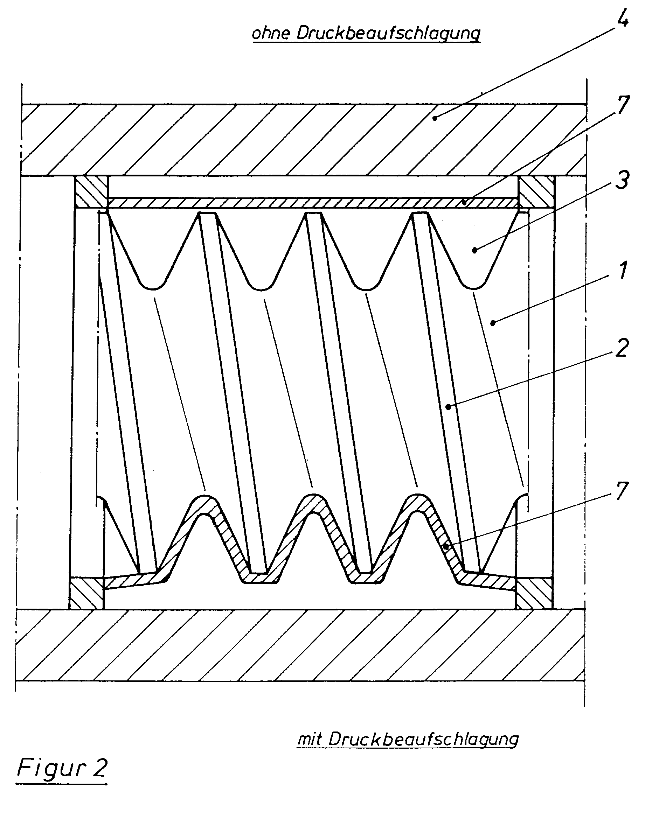

Bei der Ausführungsform nach Fig. 2 ist das Kupplungsteil 6 durch eine flexible Membran 7 gebildet, die sich in die Gewinderillen 3 durch Beaufschlagung mit hydraulischem Druck hineinverformt und dadurch ebenfalls eine starre Verbindung zwischen der Schraube 1 und dem starren Widerlager 4 herstellt, das ebenso wie bei Fig. 1 aus einem metallischen Werkstoff, insbesondere Stahl, bestehen kann.

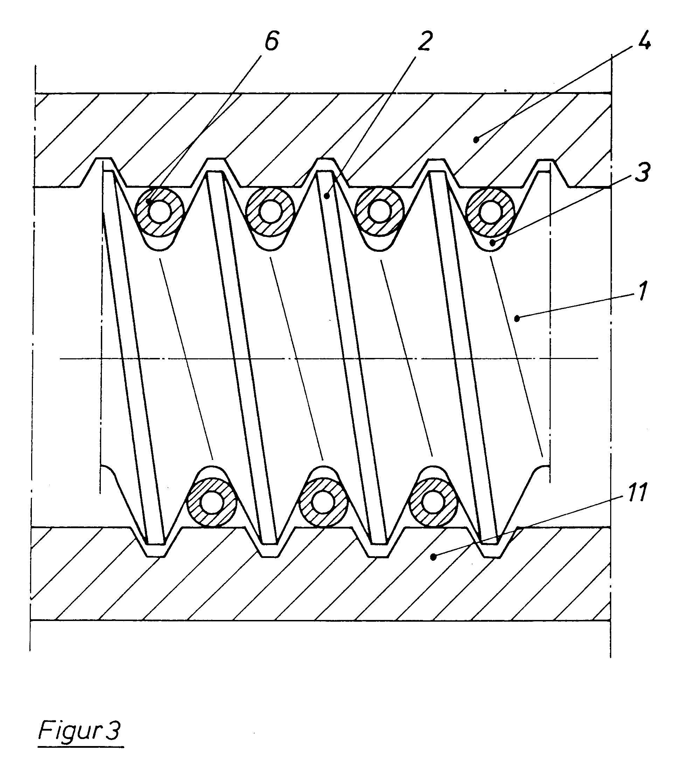

In Fig. 3 ist eine Vorrichtung gemäß der Erfindung dargestellt, wobei das starre Widerlager 4 zum einfachen Einführen der Schraube in die Vorrichtung mit einer Einführhilfe 11 in Form eines Teilgewindes versehen ist, welches eine grobe Vorpositionierung der Schraube in der Vorrichtung gewährleistet. Bei dieser Ausführungsform stützt sich das schlauchförmige Kupplungsteil innenwandig gegen die Abflachung der Einführhilfe ab.

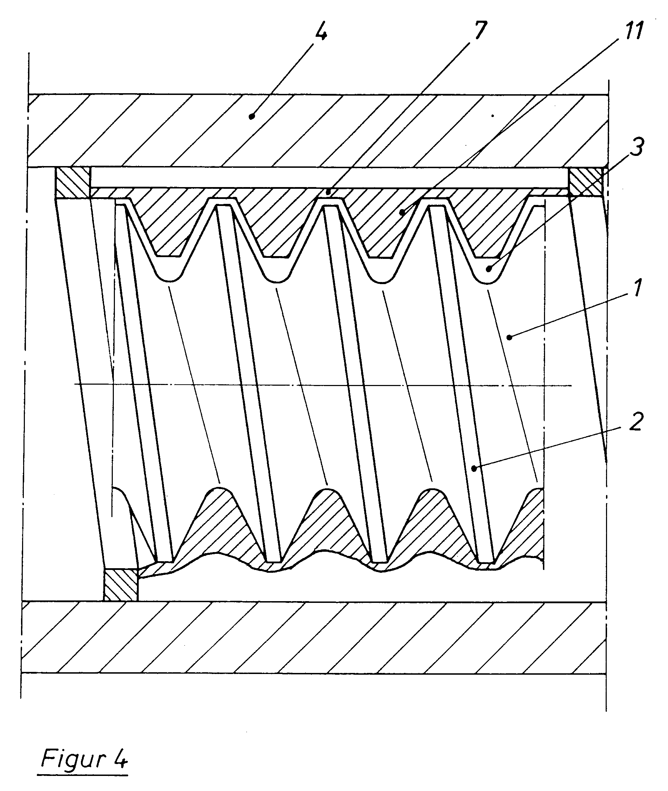

Bei der Ausführungsform nach Fig. 4 ist die aus elastischem Material hergestellte, flexible Membran 7 mit einer Einführhilfe 11 so ausgeführt, daß diese Einführhilfe 11 die Form eines Innengewindes hat, welches ein deutliches Übermaß gegenüber dem Gewinde 2 der Schraube 1 aufweist, so daß eine Vorpositionierung ohne Klemmkontakt möglich ist. Durch Druckmittelbeaufschlagung verformt sich die Membran mit der Einführhilfe 11 in die Gewinderillen 3 der Schraube 1, bis die tatsächliche Ist-Form des Gewindes 2 allseitig formschlüssig von der Membran 7 umschlossen ist. Der Druckmitteldruck wird so lange erhöht, bis der elastische Werkstoff der Membran 7 sowie der Einführhilfe so weit komprimiert ist, bis er einen quasi starren Zustand erreicht hat.

### Bezugszeichen

- 1: Schraube
- 2: Gewinde
- 3: Gewinderillen
- 4: Rohr, Widerlager
- 5: Innenwandung
- 6: Kupplungsteil, Schlauch
- 7: Membran
- 11: Einführhilfe

## Patentansprüche

1. Haltevorrichtung zum Messen und Prüfen der Koaxialität von Gewinde und Schaft an Schrauben, wobei der Halter ein über eine beliebige axiale Gewindelänge angeordnetes Kupplungsteil (6) aufweist, das beim Eingreifen in das Gewinde (2) in eine starre, unveränderliche Form bringbar und auch wieder zurückstellbar ist und sich gegen ein Widerlager (4) abstützt, **dadurch gekennzeichnet,** daß das zum Eingriff in die einzelnen Gewindegänge (2) bestimmte Kupplungsteil (6) aus elastisch verformbarem Material besteht und durch Druckmitteldruck beaufschlagt derart in die starre Form überführbar ist, daß sich das Gewinde (2) in der Vorrichtung selbst zentriert.

2. Haltevorrichtung nach Anspruch 1, **dadurch gekennzeichnet,** daß das Kupplungsteil (6) als ein durch den Druckmitteldruck beaufschlagbarer, flexibler Schlauch ausgebildet ist.

3. Haltevorrichtung nach Anspruch 2, **dadurch gekennzeichnet,** daß sich das schlauchförmige Kupplungsteil (6) gegen die z. B. geschliffene Innenwandung (5) eines als Rohr (4) ausgebildeten Widerlagers abstützt.

4. Haltevorrichtung nach Anspruch 1, **dadurch gekennzeichnet,** daß das Kupplungsteil (6) als durch den Druckmitteldruck beaufschlagbare, flexible Membran ausgebildet ist, die sich gegen das starre Widerlager (4) abstützt.

5. Haltevorrichtung nach Anspruch 1, **dadurch gekennzeichnet** daß das Kupplungsteil (6) mehrere Kupplungskörper aufweist, die in das Gewinde (2) eingreifen und die sich hydraulisch oder pneumatisch gegen das starre Widerlager (4) abstützen.

6. Haltevorrichtung nach Anspruch 2, **dadurch gekennzeichnet,** daß das starre Widerlager (4) zum einfachen Einführen der Schraube in die Vorrichtung mit einer Einführhilfe (11) in Form eines Teilgewindes versehen ist, welches eine grobe Vorpositionierung der Schraube in der Vorrichtung ermöglicht und daß sich das schlauchförmige Kupplungsteil (6) innenwandig gegen eine Abflachung der Einführhilfe (11) abstützt.

7. Haltevorrichtung nach Anspruch 4, **dadurch gekennzeichnet,** daß die aus elastischem Material hergestellte flexible Membran (7) mit einer Einführhilfe (11) so ausgeführt ist, daß diese Einführhilfe (11) die Form eines Innengewindes hat, welches ein deutliches Übermaß gegenüber dem Gewinde (2) der Schraube (1) aufweist, so daß eine Vorpositionierung ohne Klemmkontakt möglich ist, derart, daß durch Druckmittelbeaufschlagung sich die Membran mit der Einführhilfe (11) in die Gewinderillen (3) der Schraube (1) verformt, bis die tatsächliche Ist-Form des Gewindes (2) allseitig formschlüssig von der Membran (7) umschlossen ist und daß der Druckmitteldruck solange erhöht wird, bis der elastische Werkstoff der Membran (7) sowie der Einführhilfe (11) so weit komprimiert ist, daß er einen quasi starren Zustand erreicht hat.

## Claims

1. Screw-retaining device provided with a means for measuring and testing the concentricity of thread and shank on screws, whereby said retaining device has a coupler part (6) arranged over any axial threaded length and which during meshing with said thread (2) can be brought into a rigid unchangeable form and is also again resettable and props against an abutment (4), characterized in that said coupler part (6), determined for meshing with said single threads (2), consists of elastically deformable material and which is, admitted by means of pressure exerted from a pressure means, convertible into said rigid form such that said thread (2) is centering itself in said retaining device.

2. Screw-retaining device according to claim 1, characterized in that said coupler part (6) is formed as a flexible tube admittable by means of said pressure exerted from said pressure means.

3. Screw-retaining device according to claim 2, characterized in that said tube-like coupler part (6) props against the inner, for instance, polished surface of an abutment formed as a pipe (4).

4. Screw-retaining device according to claim 1, characterized in that said coupler part (6) is formed as a diaphragm admittable by said pressure exerted from said pressure means and which props against said rigid abutment (4).

5. Screw-retaining device according to claim 1, characterized in that said coupler part (6) comprises several coupler elements which are meshing with said thread (2) and propping against said rigid abutment (4) in a hydraulic or pneumatic manner.

6. Screw-retaining device according to claim 2, characterized in that said rigid abutment (4) is provided with an introducing aid (11) in form of a reference thread for plain introducing said screw into said device, enabling a rough prepositioning of said screw in said device, and that said tube-like coupler part (6) props in the inner surface against a flattening of said introducing aid (11).

7. Screw-retaining device according to claim 4, characterized in that said flexible diaphragm (7) manufactured from elastic material is carried out with an introducing aid (11) in such a manner that this introducing aid (11) has the shape of an internal thread which shows a distinct overdimension against said thread (2) of said screw (1) so that a prepositioning is possible without any clamp contact such that, by means of admittance of pressure means, said diaphragm deforms together with said introducing aid (11) into said threaded grooves (3) of said screw (1) until the effective actual form of said thread (2) is form-fit enclosed by said diaphragm (7) on all sides and that said pressure exerted by said pressure means is enhanced so long as said elastic material of said diaphragm (7) as well as of said introducing aid (11) is compressed so far as it has obtained a quasi-rigid state.

## Revendications

1. Griffe de retenue comportant un dispositif de mesure et de vérification de la concentricité du filet et de la tige des vis, le support présentant une pièce d'accouplement (6) disposée sur une longueur axiale quelconque du filet, lequel support peut prendre une forme rigide et immuable lors de l'engrènement dans le filet (2) et revenir ensuite en arrière, et s'appuie sur un palier antagoniste (4), **caractérisée en ce que** la pièce d'accouplement (6) destinée à engrener dans chaque pas du filet (2) est constituée d'un matériau élastiquement déformable et peut acquérir, par injection d'un fluide sous pression, cette forme rigide faisant que le filet (2) se centre de lui-même dans la griffe.

2. Griffe de retenue selon revendication 1, **caractérisée en ce que** la pièce d'accouplement (6) est constituée d'un flexible souple dans lequel peut êntre injecté un fluide sous pression.

3. Griffe de retenue selon revendication 2, **caractérisée en ce que** la pièce d'accouplement (6) en forme de flexible s'appuie contre la paroi intérieure (5) par ex. rectifiée d'un palier antagoniste en forme de tuyau (4).

4. Griffe de retenue selon revendication 1, **caractérisée en ce que** la pièce d'accouplement (6) a la forme d'un diaphragme souple dans lequel peut être injecté un fluide sous pression et qui s'appuie contre le palier antagoniste rigide (4).

5. Griffe de retenue selon revendication 1, **caractérisée en ce que** la pièce d'accouplement (6) présente plusieurs corps d'accouplement engrenant dans le filet (2) et s'appuyant par pression hydraulique ou pneumatique contre le palier antagoniste (4).

6. Griffe de retenue selon revendication 2, **caractérisée en ce que** le palier antagoniste rigide (4) est équipé d'un moyen auxiliaire d'introduction (11), sous forme de taraudage partiel, simplifiant l'introduction de la vis dans la griffe et permettant de positionner grossièrement la vis dans la griffe, et en ce que la pièce d'accouplement (6) s'appuie contre une partie aplatie de la paroi intérieure du moyen auxiliaire d'introduction (11).

7. Griffe de retenue selon revendication 4, **caractérisée en ce que** le diaphragme souple (7) fabriqué dans un matériau élastique, avec un moyen auxiliaire d'introduction (11), est conçu de telle sorte que ledit moyen auxiliaire d'introduction (11) ait la forme d'un taraudage présentant une nette surcote par rapport au filet (2) de la vis (1), ce qui permet un positionnement préliminaire sans bridage, de telle sorte que lors de la mise sous pression, le diaphragme doté du moyen auxiliaire d'introduction (11) épouse le creux (3) du filet de la vis (1) jusqu'à ce que la géométrie effective du filet (2) soit solidairement enveloppée du diaphragme (7) et que la pression du fluide s'accroît jusqu'à ce que le matériau élastique du diaphragme (7) ainsi que du moyen auxiliaire d'introduction (11) soit comprimé à tel point qu'il parvienne à un état quasi rigide.
